## Europäisches Patentamt

(19) **European Patent Office**

**Office européen des brevets**

(11) Publication number: **0 110 808**
**A2**

# (12) EUROPEAN PATENT APPLICATION

(21) Application number: **83630182.0**

(22) Date of filing: **04.11.83**

(51) Int. Cl.³: **E 02 D 5/52, E 02 B 17/02, E 21 B 17/046, F 16 L 37/12, F 16 B 7/02**

(30) Priority: **06.12.82 US 447459**

(43) Date of publication of application: **13.06.84 Bulletin 84/24**

(84) Designated Contracting States: **DE FR GB IT NL**

(71) Applicant: **VARCO INTERNATIONAL, INC., 800 North Eckhoff Street, Orange, CA 92668 (US)**

(72) Inventor: **Ahlstone, Arthur G., 354 Agnus Drive, Ventura California 93003 (US)**

(74) Representative: **Weydert, Robert et al, Office Dennemeyer S.à.r.l. 21-25 Allée Scheffer P.O. Box 41, L-2010 Luxembourg (LU)**

(54) **Self-aligning rigid pile connections.**

㊗ A rigid connection for joining two piles which are to be driven into an earth formation, with the connection preferably including a box section (22) having a tapering internal surface (56) and a pin section (21) having a tapering external surface (32), a locking member (23) carried by the box section and actuable into engagement with the pin section in a relation retaining the sections against axial separation and holding them tightly together, and a stabbing end portion (46) on the pin section (21) which is adapted to extend through a minimum diameter portion of the box section (22) in a condition in which the axes of the two sections are disposed at an angle to one another, enabling the two sections to be easily stabbed axially together in a non-aligned condition and then by virtue of the stabbing end portion (46) and the tapering surfaces (32, 56) automatically deflect one another into properly aligned condition as the sections move progressively closer together. The locking member (23) may be tightened inwardly against the pin section by an actuating element (71) connected threadedly to the box member (22) in a relation enabling removal of the actuating element and certain other related parts laterally outwardly to the exterior of the box section while the pin and box sections remain attached together. A holding structure retains the actuating element against loosening rotation in the fully madeup condition of the joint.

FIG. 3A

"SELF-ALIGNING RIGID PILE CONNECTIONS"

Background of the Invention

This invention relates to improved rigid pipe joints which have been especially designed in certain respects for use as connections between successive sections of a pile structure to be driven into the ground for anchoring a marine drilling platform to an underwater earth formation. The invention will be described primarily as applied to that use.

Marine platforms are normally retained in place on the ocean floor by driving a number of elongated piles downwardly through tubular portions of a platform 'jacket' and into the earth formation to a depth sufficient to assure against shifting movement of the pile or platform structure and give the platform adequate support for the drilling function it is to perform. The joints between successive sections of the pile structures must be sufficiently rigid to withstand the heavy driving forces to which the pile is subjected as it is forced into the ground, and to withstand the correspondingly very high reactive forces occurring after each blow of the driving hammer. Any looseness in the joints may cause relative displacement of the interconnected sections when subjected to these driving and reactive forces, with resultant possible destruction of one or more of the joints. Consequently, it is essential that the pile section be connected as rigidly as possible and with adequate strength to withstand the forces encountered during the driving operation.

The most common type of joint utilized in the past for this purpose, particularly for those portions of the pile structure which are to remain permanently in place and never be recovered, is a welded joint, formed by a time consuming process of laboriously making an annular weld between abutting ends of each pair of pile sections to be joined. Unfortunately, each such joint necessarily requires a period of several hours for completion, and slows the overall pile driving process to a very undesirable extent. In those sections of a pile structure which are to be recovered after drilling, special mechanical joints are sometimes used in lieu of welding, in order to reduce the time required for completion of each joint. This reduction in time expended can be economically very significant, in view of the large amount of equipment necessarily required for installing a platform and the very high hourly cost of that equipment. In most instances, a fleet of several barges, tugboats, and other supporting vessels must be utilized in moving a platform to a desired location and securing it in place, with this fleet or 'spread' costing as much as fifty thousand to five hundred thousand dollars per day depending on location in the world and availability. Besides this cost factor, the length of time required for installation of a platform can also be critical because of weather conditions, which in many areas of the world may leave only a very short weather 'window' during which wind and sea conditions are sufficiently calm to permit attempts at platform installation.

Several mechanical pile connections have been devised in the past in an attempt to satisfy the above discussed requirements. One such connection is known as the "breech block" joint, in which interfitting pin and box sections are adapted to be joined together by a predetermined limited amount of relative rotation between the parts. Other prior expedients have utilized locking rings receivable within opposed grooves in the interconnected parts. Still other prior devices have included locking members slidably mounted within pockets in the side wall of a box section and actuable radially inwardly against the pin section, and acting by such inward movement to cam the pin and box sections axially together and retain them against separation. One joint of this latter type is shown in U.S. Patent Number 4,094,539 issued June 13, 1978 to Larry E. Reimert on "Rigid Connector And Piling".

A disadvantage of many of these prior connectors resides in the difficulty of accurately aligning the two

3    0110808

sections of the joint with one another for effective interconnection. This difficulty has necessitated the use in many instances of special pile handling and aligning equipment for precisely orienting two pile sections rela to one another as they are joined.

## Summary of the Invention

A purpose of the present invention is to provide an improved connector capable of joining two pile sections or other tubular element together very quickly and easily and with a minimum of equipment, but in a manner forming a highly rigid connection of great strength adapted to withstand high intensity forces such as are encountered as a pile string is driven into the ground. To attain these results, a joint embodying the invention includes a pin section and a box section which can be moved relatively together in an initially non-aligned condition, that is, with the axis of one of the sections disposed at a substantial angle relative to the axis of the other section, and which by virtue of their unique configuration act to progressively and automatically align themselves as they are advanced together and ultimately move into precisely axially aligned condition. The sections are then qucikly and easily locked in that interfitting condition, and retained rigidly against relative displacement under the influence of driving or reactive forces.

The self-aligning action is attained in part by formation of the box section to have a tapering internal surface decreasing progressively in diameter toward a predetermined minimum internal diameter portion of the box. Similarly, the pin has an external tapering surface received within the internal tapering surface of the box in the fully assembled condition of the parts. At least one locking member is carried by the box section for movement toward and away from the pin section and acts to cam the two sections axially together when the locking member is actuated radially inwardly, with such tightening movement of the sections desirably being limited by engagement of two abutting annular shoulders on the sections. Beyond the tapering surface of the pin section, that section has a stabbing portion which has an external diameter less than the diameter of the mentioned minimum diameter portion of the box section, and which therefore can be stabbed through that minimum diameter portion of the box even though the axes of the two sections are not aligned but rather are disposed at an angle to one another. Beyond its minimum diameter portion, the box section contains a region of increased diameter designed to allow projection of the stabbing portion of the pin into that area under the discussed non-aligned stabbing conditions. Thus, the stabbing end portion of the pin section can be inserted easily through the minimum diameter portion of the box, at an angle thereto, and as the parts then progressively move axially together the stabbing portion and the tapered surfaces on the parts attain the desired gradual alignment of the sections into their proper ultimate condition.

The locking members may be actuated toward and away from the pin section by actuating elements which are threadedly connected to the box section. Certain additional features of the invention relate to the preferred formation of these actuating elements and related parts in a manner enabling them to be withdrawn to the outside of the box section for repair or replacement while the pin and box sections remain connected, and desirably while the locking members remain in the box section. For this purpose, a fastener may retain each of the actuating elements, with that fastener being detachable from the outside of the box section, and by such detachment acting to free the actuating element for removal.

The actuating element may be retained against rotation, to thus secure the joint in its assembled condition, by a part disposed about a non-circular portion of the actuating element and engaging it in a rotary driving relation. This part may be releasably retained against rotation by spring pressed holding elements which project into apertures in the part and are automatically released by insertion of a wrench into adjusting relation with the part.

## Brief Description of the Drawings

The above and other features and objects of the invention will be better understood from the following detailed description of the typical embodiment illustrated in the accompanying drawings in which:

Fig. 1 illustrates the manner in which an upper pile member can be lowered downwardly into engagement with a lower inclined pile string which has been driven through the guides of a marine platform jacket;

Fig. 2 is an enlarged vertical section through the portion of the apparatus enclosed within the circle identified by the number 2 in Fig. 1, and taken on line 2-2 of Fig. 4;

Fig. 3 is a further enlarged fragmentary axial section through the pin and box sections of Fig. 2, illustrating one of the locking members and its associated parts;

Fig. 3A is an enlargement of part of Fig. 3;

Fig. 4 is a reduced scale fragmentary horizontal section taken on line 4-4 of Fig. 3, and showing one of the threaded actuating elements and related parts removed laterally outwardly from the box section;

Fig. 5 is an enlarged fragmentary side elevational view taken on line 5-5 of Fig. 3; and

Fig. 6 is a view corresponding to a portion of Fig. 3, but showing a variational form of the invention.

## Description of the Preferred Embodiments

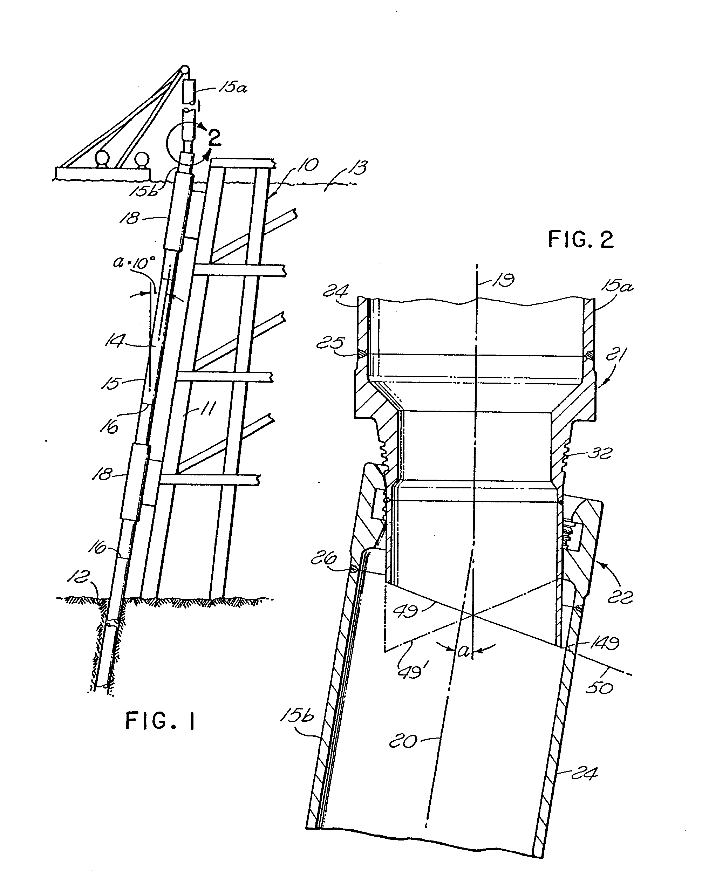

As a typical environment for use of a connector structure embodying the invention, Fig. 1 illustrates fragmentarily at 10 a 'jacket' for a marine well drilling platform having legs 11 which are supported on the earth formation or floor 12 beneath a body of water 13. The jacket is secured firmly in place by a number of pile structures one of which is represented at 14, and which include a series of tubular pile elements 15 interconnected at joints 16 and 17 and driven downwardly through aligned tubular pile guides 18 carried by the jacket. The joints 16 in the lower non-recoverable portion of the string may take the form of annular welds between successive lengths of piling, while the upper joints 17 which attach together lengths of piling adapted to ultimately be recovered and reused are mechanical connections embodying the invention as illustrated in detail in Figs. 2 through 6. The pile strings 14 are normally driven into the earth at a 'batter angle' $a$ (Figs. 1 and 2) with respect to the true vertical in order to enhance the stability of the ultimate platform structure, with that angle in most cases being ten degrees. The joint of the present invention is especially designed to allow easy stabbing and self-alignment of an upper pile section 15a into the upper end of a next lower pile section 15b in a condition in which the axis 19 of the upper section is disposed directly vertically while the axis 20 of section 15b is inclined at the mentioned ten degree batter angle with respect to vertical axis 19.

As seen best in Fig. 2, the pile connection of the invention includes a pin section 21 adapted to project into a box section 22 and be rigidly secured thereto by a series of circularly spaced locking elements 23. It is in most instances preferred that the pin section be above and project downwardly into the box section, though this relationship may if desired by reversed, with the pin section facing upwardly and the box section facing downwardly. In either orientation, the pin and box can be easily stabbed together in relatively angularly disposed non-aligned condition and by movement axially together will automatically cam one another into precisely axially aligned condition.

Each of the upper recoverable quickly detachable pile sections 15a, 15b, and the like includes a main body 24 taking the form of a rigid internally and externally cylindrical metal pipe, normally formed of steel, having a pin section 21 at a first of its ends and a box section 22 at its opposite end. The pin and box sections may be formed separately from the main pipe 24 and be welded annularly thereto at 25 and 26.

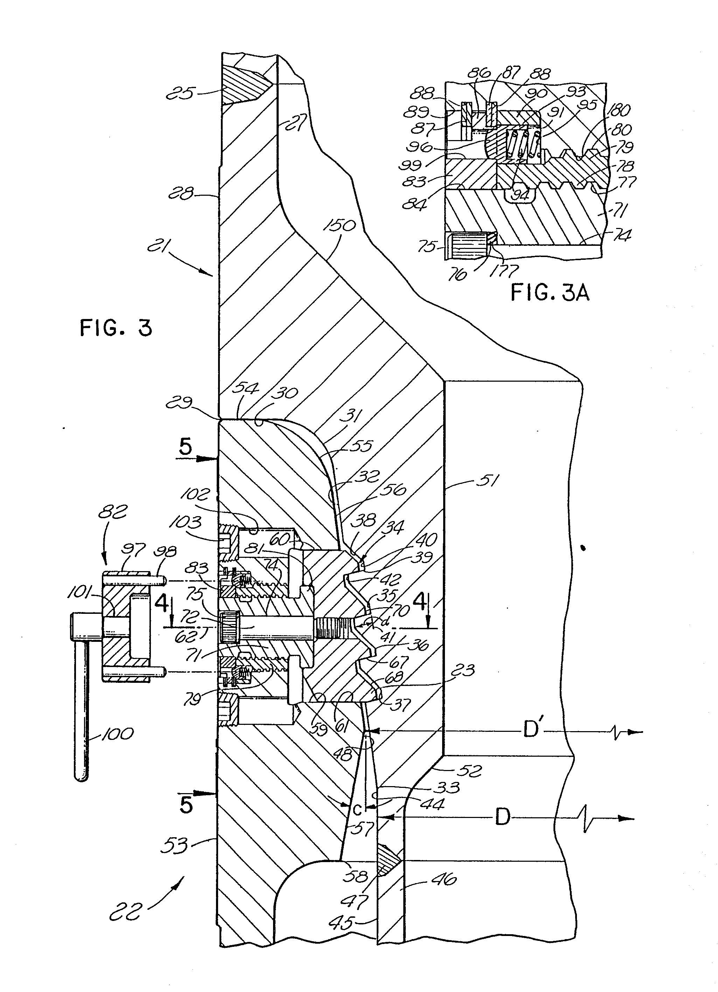

As seen best in Fig. 3, each pin section 21 may have an upper cylindrical portion 27 having a wall thickness essentially the same as and aligned with the side wall of main portion 24 of the pile. The outer surface 28 of the pin section is externally cylindrical at essentially the diameter of the outer surface of pipe 24 to a location 29 at which a transverse annular shoulder 30 is formed on the pin. From the radially inner extremity of that shoulder 30, the surface of the pin section curves downwardly at 31 to form a fillet which merges with a downwardly tapering external frusto-conical surface 32 on the pin section centered about the main longitudinal axis 19 of the pin. The conical surface 32 tapers continuously downwardly and inwardly to a location 33 except as that surface is interrupted by the formation of four similar annular grooves 34, 35, 36 and 37 in the outer surface of the pin. These grooves have the axial sectional configuration illustrated in Fig. 3, being defined by upper walls 38 which are inclined to advance relatively rapidly axially as they advance radially inwardly, and lower walls 39 which advance upwardly as they advance radially inwardly but at a less abrupt angle than upper walls 38. At their radially inner extremities, the grooves 34, 35, 36 and 37 may be defined by inner surfaces 40.

All of the grooves 34, 35, 36 and 37 may extend radially inwardly into the material of the pin a common distance d beyond the conically tapering surface 32 of the pin, so that the inner extremity 40 of the bottom groove 37 is closer to axis 19 of the pin section than is the inner wall 40 of the next higher groove 36, while the wall 40 of that groove is closer to the axis than is the inner wall of groove 35, and similarly the inner wall 40 of groove 35 is closer to the axis than is the inner wall 40 of the upper groove 34. Preferably, the inner walls 40 of the different grooves are aligned to form in effect portions of a common cone represented at 41 in Fig. 3. The peaks 42 of the teeth 43 formed between grooves 34, 35, etc. are similarly aligned conically, to form in effect portions of the previously discussed external tapering surface 32 of the pin. Downwardly beyond the point 33 of Fig. 3, the outer surface of the pin section has a cylindrical portion 44, centered about axis 19, aligned axially with and forming in effect a continuation of the outer cylindrical surface 45 of a lower stabbing tube 46 secured to the pin section by an annular weld 47. The diameter $D$ of surfaces 44 and 45 of the lower portion of the pin structure including its stabbing pipe 46 is substantially less than the diameter $D'$ of the minimum internal diameter portion 48 of box section 22. Stabbing tube 46 terminates downwardly at a lower edge 49 lying essentially in a plane 50 disposed transversely of axis 19. Internally, the pin section may be defined by an upper tapering inner surface 150, merging with a vertical internal surface 51, beneath which the inner surface of the pin extends outwardly at 52, with all of these surfaces being annular about axis 19.

Each of the box sections 22 has an external cylindrical surface 53 centered about the longitudinal axis 20 of the box, and which is flush with the outer surface 28 of a connected pin section and substantially flush with the outer surfaces of the main bodies 24 of the piles. At its upper end, each box section has an annular shoulder 54 which is perpendicular to axis 20 and abuts axially against shoulder 30 of the pin. From the radially inner edge of shoulder 54, the box has a curving fillet surface 55 spaced from surface 31 and merging into a downwardly conically tapering inner surface 56 centered about axis 20 and disposed parallel to and spaced slightly from the tapering external surface 32 of the pin in the fully assembled condition of the joint. This tapering surface continues downwardly to the previously mentioned minimum diameter portion 48 of the box section, beyond which the inner surface of the box flares progressively and conically at 57 from the location 48 to a point 58. Surface 57 like the other internal surfaces of the box is centered about axis 20. Also, surface 57 as viewed in axial section (Fig. 3) is disposed at an angle $c$ to axis 20 which preferably substantially equals the batter angle a at which the installed pile string is inclined with respect to the vertical. More particularly, the batter angle a and the angle c are both desirably approximately ten degrees and for best results exactly ten degrees.

The tapering internal surface 56 of the box is interrupted at the location of an annular internal recess 59 formed in the box and facing radially inwardly. A series of the locking members 23 are contained within this recess 59, with each of these elements having the axial cross-section illustrated in Fig. 3 and being confined against vertical movement and guided for only radial movement relative to the box section by engagement at 60 and 61 of transverse shoulder surfaces on the locking member and box. Each locking element is thus shiftable radially with respect to the pin section along an axis 62 disposed directly perpendicular to and intersecting the main longitudinal axis 20 of the box section. This radial movement of the locking element causes a series of teeth 63, 64, 65 and 66 to move into and out of grooves 34, 35, 36 and 37 respectively in the pin section. In correspondence with the configuration of the grooves, the bottom tooth 66 projects farther radially inwardly than the next higher tooth 65, which projects farther inwardly than tooth 64, which in turn projects farther inwardly than tooth 63, so that the teeth are in effect arranged in a downwardly tapering or converging essentially conical pattern, with slightly inclined camming undersurfaces 67 of the teeth engaging correspondingly inclined surfaces 39 of the pin grooves, and with more abruptly inclined upper surfaces 68 of teeth being disposed parallel to but always spaced slightly from correspondingly inclined surfaces 38 of the grooves, and further with the radially inner conically aligned downwardly tapering surfaces 70 of the teeth being disposed essentially parallel to but always spaced from inner surfaces 40 of the grooves. Thus, radially inward movement of the locking elements 23 acts through the engagement of surfaces 39 and 67 to cam the pin downwardly relative to the box, bringing stop shoulders 30 and 54 of the pin and box into tight engagement resulting in a very rigid connection between the parts. Shoulders 30 and 54 halt this tightening movement between the pin and box before any portion of surface 56 can engage any portion of surface 32, and before surfaces 68 and 70 on the teeth of the locking elements can engage surfaces 38 and 40 in the grooves of the pin element.

Locking elements 23 are moved radially between locking positions within grooves 34, 35, etc. and radially outer released positions in which the teeth 63, 64, etc. and entirely radially outwardly of and beyond the grooves by an actuating element 71 which is connected to the corresponding locking element for rotation relative thereto about axis 62. This connection is effected by a bolt 72 extending along axis 62 and detachably threadedly connected to the locking element at 73, with parts 71 and 72 having engaging cylindrical bearing surfaces at 74, and with an enlarged diameter head 75 of the bolt acting through an annular washer 76 to abut against a transverse shoulder 177 in element 71 in a relation confining element 71 against axial movement relative to element 23 while permitting sufficient looseness to enable rotation of part 71. Externally, actuating element 71 has screw threads 77 which engage internal threads 78 in an insert 79 whose external threads 80 engage internal threads 180 of the box section. By virtue of the threaded engagement at 77-78, rotation of actuating element 71 causes the enlarged annular radially inner head portion 81 of element 71 to move locking element 23 radially inwardly or outwardly as desired to either lock the pin and box together or release them for axial separation.

Element 71 is rotated about axis 62 by a tool 82 through a driving part 83 disposed about a radially outer externally non-circular preferably hexagonal portion 84 of element 71. The part 83 has an inner correspondingly non-circular preferably hexagonal opening 85 disposed about portion 84 of element 71 in a manner transmitting rotation from part 83 to element 71 while permitting axial movement of the latter relative to the former. The part 83 is essentially a ring having a reduced axial thickness portion 86 confined axially between two snap rings 87 removably received within grooves 88 formed in a cylindrical counterbore 89 formed in the side wall of the box section and disposed about axis 62 at the outer extremity of threads 180.

Insert 79 has an enlarged diameter flange portion 90 received within counterbore 89 inwardly of part 83, with this flange containing a series of circularly spaced cylindrical openings 91 centered about axes parallel to adjustment axis 62. Locking pins 93 are spring pressed laterally outwardly within openings 91 by small coil springs 94 bearing against the transverse annular shoulder 95 formed at the inner end of counterbore 89. The reduced diameter cylindrical extremities of pins 93 are receivable within cylindrical openings 99 in part 83 in a relation locking part 83 against rotation about axis 62, and thus retaining actuating element 71 against such rotation. The larger diameter portions of the pins abut against part 83 about openings 99 to limit the spring pressed leftward movement of the pins as viewed in Figs. 3 and 3A.

The adjusting tool 82 has a circular body 97 rigidly carrying a series of similar cylindrical pins 98 projecting in a common direction parallel to one another and parallel to axis 62 in the Fig. 3 position of the tool, with these pins being dimensioned and positioned for reception within the various apertures 99 in part 83. The pins 98 of tool 82 are of a length to simultaneously engage the various spring urged pins 93 when the tool is moved rightwardly in Fig. 3, and to press those pins rightwardly out of the apertures 99 in a manner releasing part 83 for rotation by tool 82. Such rotation may be effected in any convenient manner, as by a wrench 100 connected into a socket recess 101 in the outer side of body 97 of the tool.

Passages 102 extending radially inwardly within the wall of box section 22 may be provided to permit access to the inner ends of the adjusting parts, radially

0110808

outwardly of locking elements 23, in order to allow debris to be removed from this location or for other purposes. These passages may be closed by removable plugs 103 threadedly connected into the outer ends of the passages.

To now describe the manner in which a connection embodying the features illustrated in Figs. 1 through 4 is made up, assume that the pile string 14 is positioned as shown in Fig. 1, with the top section 15b of the string having an upwardly facing box end 22 disposed at a ten degree batter angle with respect to the vertical. Assume also that the locking elements 23 are retracted radially outwardly to positions in which their inner conical surfaces 70 are essentially conically aligned with or located radially outwardly of the inner tapering surface 56 of the box section. As the next successive pile section 15a and its pin end 21 are moved downwardly along axis 19, with the pin section in directly vertical condition, the lower stabbing end 46 of the pin can move downwardly into the upper tapered end of the box section as seen in Fig. 2, and is deflected by the tapering surface 56 of the box to a position in which the stabbing end 46 of the pin passes downwardly through the minimum diameter portion 48 of the box section. Such extension of the stabbing end 46 through the box is possible because surfaces 44 and 45 of the lower portion of the pin are of a diameter smaller than that of minimum diameter portion 48 of the box, as discussed, and because of the flaring configuration of surface 57 of the box which permits the lower end of the pin section to extend downwardly beyond the minimum diameter portion 48 of the box and into the progressively enlarging recess therebeneath. If the lower angularly disposed end 49 of stabbing tube 46 of the pin is turned to a position such as that represented in full lines in Fig. 2, the downward movement of the pin may cause its end 49 to engage the interior of the main body 24 of pile section 15b at 149, and thereby deflect the lower end of the pin section laterally inwardly into more closely aligned relation to the box. Ultimately, the tapered surface 32 on the pin section contacts the tapered internal surface 56 within the box to further align the parts as the pin moves downwardly, and bring the parts into completely aligned condition in which their axes 19 and 20 are coincident. If the pin as it is lowered is turned to a position in which its lower edge 49 is in the position represented in broken lines at 49' in Fig. 2, that edge may never actually engage the inner wall of section 15b, in which event the deflection of the two axes into coincidence may be accomplished substantially entirely by engagement of tapered surfaces 32 and 56. In either event, the downward movement of the pin is halted by interengagement of transverse shoulders 30 and 54 on the pin and box sections, after which the locking elements 23 are actuated inwardly into grooves 34, 35, 36, and 37 to progressively cam the pin section tightly downwardly in a manner desirably attaining a prestressed condition in the parts and producing a very rigid connection capable of withstanding driving and reactive forces applied thereto as the pile structure is driven further into the earth formation at the bottom of the sea. The tightening action of each of the locking elements is effected by insertion of tool 82 rightwardly into engagement with part 83, with the pins 98 of the tool moving into openings 99 in part 83 and pressing the locking pins 93 to their released positions, after which the tool is rotated about axis 62 to correspondingly turn part 83 and actuating element 71 in a manner forcing the locking element against the cam surfaces of the pin.

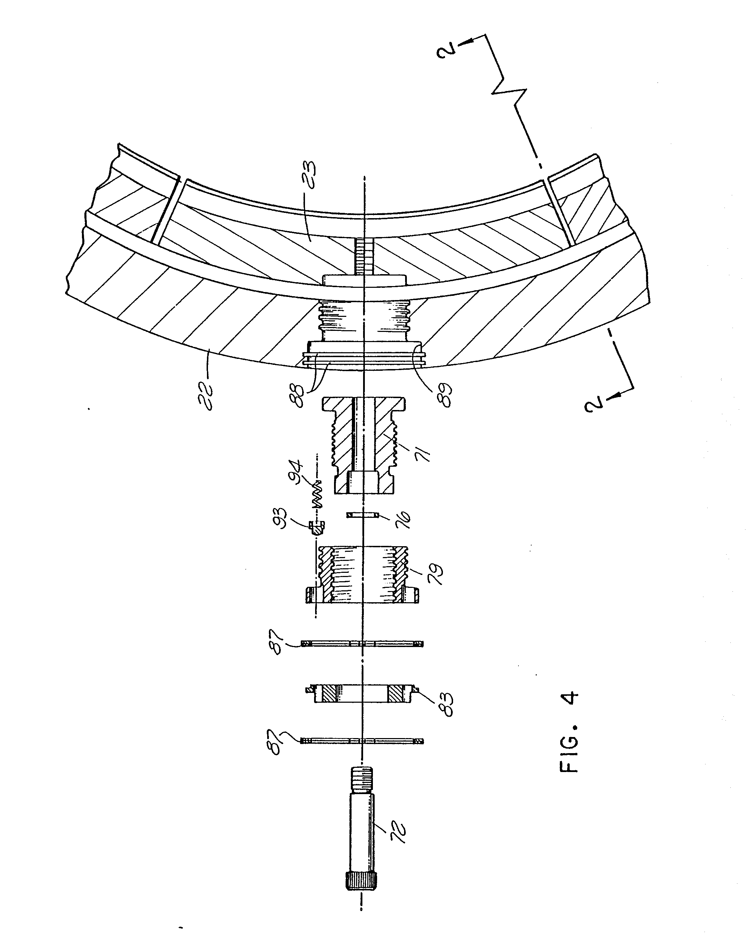

If one or more of the actuating elements 71 or any of the parts associated therewith other than the locking member 23 becomes worn or should be replaced or repaired for any reason, the illustrated construction allows detachment of these parts while the pin section and box section remain rigidly interconnected by others of the locking elements. To remove such parts from the box section, a user may constrict the first resilient snap ring 87 radially inwardly to a reduced diameter condition for removal from groove 88, then withdraw part 83 axially outwardly (leftwardly in Fig. 3) from counterbore 89, and

14    0110808

then constrict the second of the snap rings 87 radially inwardly to a reduced diameter condition enabling it also to be withdrawn leftwardly from the counterbore. This frees locking pins 93 and their actuating springs 94 for removal leftwardly from the counterbore. Either before or after the other steps discussed above, the retaining and bearing screw 72 can be unscrewed from its threaded engagement at 73 with the locking member 23, by a tool received within a non-circular recess 189 in the outer end of the screw. After removal of all of these parts, a user can place a wrench into engagement with the non-circular hexagonal portion 84 of actuating element 71, and rotate that element in a lefthand direction about axis 64, moving element 71 leftwardly until its head 81 engages the right end of insert 79, after which further rotation of element 71 causes the insert and element 71 to be unscrewed simultaneously and together from the box section by virtue of the threaded connection 80. This removal of elements 71 and 79, and screw 72, is illustrated in Fig. 4. In order to permit such detachment of the parts, the inner head 81 of element 71 has a maximum diameter smaller than the internal diameter of threads 180 of the box section so that the head can be withdrawn outwardly through those threads. After the actuating parts have been removed as illustrated in Fig. 4, those parts may be repaired or replaced as desired, and the assembly can then be screwed back into position by a reversal of the above discussed procedure. If the internal threads within the insert become worn, the threaded connection between the insert and element 71 can be returned to essentially its original condition by substitution of a new insert in the assembly.

An alternative way of detaching parts 71 and 79 from the box, after elements 72, 76, 83, 87, 93 and 94 have been removed, is by so positioning tool 82 that its pins 98 extend into openings 91 in insert 79, and then turning the tool to unscrew part 79 from threads 180, with the connected element 71 being carried by and withdrawn with insert 79 during such removal.

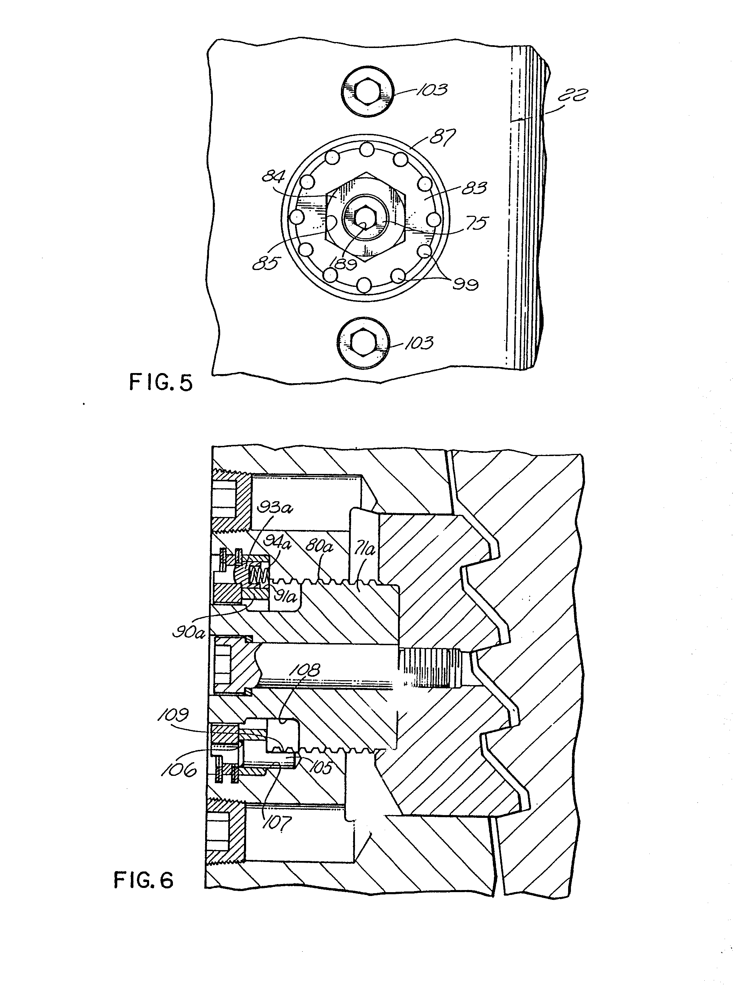

Fig. 6 shows a variational arrangement in which the element 71a which serves the function of actuating element 71 of Figs. 1 to 5 is of a larger diameter than element 71, and has external threads 80a engaging internal threads 180a in the box section 22a directly rather than through an insert such as that shown at 79 in the first form of the invention. As in the first form of the invention, all of the parts except the locking elements 23 can be removed laterally outwardly to the exterior of the box section for repair or replacement without breaking the rigid connection between the pin and box sections. That is, while the actuating element 71a and other parts associated with one of the locking elements are being removed and replaced or repaired, all of the other locking elements can be retained in tight locking engagement with the grooves in the pin section. The stabbing facility and self-aligning characteristics of the first form of the invention are also attained in the Fig. 6 arrangement.

The locking pins 93a and springs 94a in Fig. 6 are contained within openings 91a in a ring 90a which is formed separately from element 71a and is confined behind one of the snap rings 87a in the same manner that flange 90 of part 79 is retained in Fig. 3A. Ring 90a is retained against rotation relative to the box 22a in any suitable manner, preferably by providing the ring with one or more pins 105 received within one or more of the openings 91a in the ring, and welded thereto at 106, and projecting into corresponding recesses or bores 107 formed in the box to key ring 90a against rotation. Pins 93a and springs 94a may typically be provided in two of the openings 91a while pins 105 are provided in the remainder of the openings 91a. Element 71a and pins 105 may be cut away at 108 and 109 to avoid interference by pins 105 or ring 90a with outward movement of element 71a in retracting elements 23a from their locking condition.

CLAIMS

1. A rigid joint comprising a tubular box section having a tapered internal surface decreasing in diameter toward a minimum internal diameter portion of said section, a tubular pin section adapted to project into said box section and to be releasably retained against axial separation therefrom and having a tapering external surface to be received within and tapering in the same direction as said internal surface of the box section, characterized by said pin section having a stabbing end portion beyond said tapering external surface thereof with an external diameter substantially smaller than said minimum internal diameter portion of the box section for extension therethrough with the axes of said sections disposed at an angle to one another as the sections are stabbed axially together, and said box section having a portion axially inwardly beyond said minimum internal diameter portion thereof which is of greater internal diameter than said minimum diameter portion and is adapted to receive said stabbing end portion of the pin section with the axes of said sections at said angle.

2. A joint as claimed in claim 1, in which said portion of the box section axially inwardly beyond said minimum internal diameter portion thereof is defined by an inner surface of the box section flaring to a progressively increasing diameter as it advances inwardly beyond said minimum diameter portion.

3. A joint as claimed in either of the preceding claims, including at least one locking member movable relative to said sections between a locking position in which it retains the pin and box sections against axial separation and a released position.

4. A joint as claimed in claim 3, including an actuating element connected threadedly to said box section and operable by rotation relative

thereto to actuate said locking member generally radially inwardly and outwardly toward and away from the pin section.

5.   A joint as claimed in claim 4, including a retaining fastener extending through said actuating element and threadedly connected to said locking member and rotatably securing said actuating element to said locking member, said fastener being removable outwardly from said box member to the exterior thereof while said sections remain interconnected, and said actuating element being removable laterally outwardly to the exterior of the box section while said sections remain interconnected.

6.   A joint as claimed in claim 4, including a part adapted to be turned from the outside of said box section, said part and said actuating element having non-circular portions engaging in a relation enabling said part to turn said actuating element, and means for releasably holding said part against rotation.

7.   A joint as claimed in any of the preceding claims, in which said pin section has a plurality of axially spaced grooves formed in its outer surface with different ones of said grooves decreasing progressively in diameter in essential correspondence with the taper of said tapering external surface of the pin section, said locking member having projections extending into said grooves and of different diameters corresponding essentially to the taper of said internal tapering surface of the box section, said grooves and projections having camming surfaces urging said pin and box sections tightly axially together in response to inward movement of the locking member toward the pin section.

8.   A rigid joint comprising a tubular box section, a tubular pin section adapted to project into said box section, at least one locking member mounted to said box section for actuation relative thereto toward and away from the pin section and operable by inward actuation to retain the pin and box sections against axial separation, and an actuating element connected threadedly to the box section and operable by rotation to actuate said locking member inwardly against the pin section for retaining the sections together; characterized by a part adapted to be turned from the outside of said box section and having a non-circular portion engaging a non-circular portion of said actuating element in a relation transmitting rotary motion from said part to said actuating element, and holding means for releasably retaining said part against rotation.

9. A joint as claimed in claim 8, in which said actuating element and said part are movable relative to one another along the axis of rotation of the actuating element.

10. A joint as claimed in claim 8 or claim 9, in which said actuating element is connected threadedly to said box section through a tubular insert having an internal thread engaging said actuating element and an external thread engaging said box section, said holding means including means carried by said insert for retaining said part against rotation.

11. A joint as claimed in any of claims 8 to 10, in which said part has a plurality of circularly spaced openings for receiving projections on a wrench to turn said part, said holding means including spring urged pins yieldingly urged into said openings in a relation retaining said part against rotation but adapted to be deflected out of said openings by said projections on a wrench for permitting rotation of the part.

12. A rigid joint comprising a tubular box section, a tubular pin section adapted to project into said box section, at least one locking member mounted to said box section for actuation relative thereto between a locking position in which it retains the pin and box sections against axial separation and a released position, an actuating element connected threadedly to said box section for rotation relative thereto and operable by such rotation to actuate said locking member between said positions thereof, and a fastener detachably securing said actuating element rotatively to said locking member, characterized by said fastener being exposed for removal to the outside of the box section while said sections remain connected and while said locking member remains in the box section, and said actuating element being free for removal laterally outwardly to the exterior of said box section after removal of said fastener and while said sections remain connected and said locking member remains in the box section.

13. A joint as claimed in claim 12, including an essentially tubular insert disposed about said actuating element and having internal threads engaging said actuating element and external threads engaging a threaded bore extending generally radially through a wall of said box section, said bore being of a diameter to pass said actuating element outwardly therethrough and to the exterior of the box section when said insert is removed from the box section.

14. A joint as claimed in claim 12, including an essentially tubular insert disposed about said actuating element and having internal threads engaging the actuating element and external threads engaging said box section, said insert having a flange containing apertures, there being spring pressed detent elements within said apertures, and a part disposed about an outer portion of said actuating element and engaging it in rotary driving relation and containing apertures into which said spring pressed detent elements project.

15a

2

15b

18

10

13

a·10°

14

15

16

11

18

16

12

FIG. 1

FIG. 2

24

19

15a

25

21

32

26

22

49

149

49'

a

50

15b

20

24

2/4

0110808

FIG. 3

FIG. 3A

FIG. 4

FIG. 5

FIG. 6